# EUROPÄISCHE PATENTSCHRIFT

(11) **EP 3 446 033 B1**
(45) Veröffentlichungstag und Bekanntmachung des Hinweises auf die Patenterteilung: **10.06.2020**
(21) Anmeldenummer: 17723000.0
(22) Anmeldetag: 06.04.2017
(51) Int. Cl.: F21V 33/00, F21V 17/02, H02B 1/30, F21S 4/28, F21W 131/301, F21V 5/04

(54) **SCHALTSCHRANKLEUCHTE FÜR DIE BELEUCHTUNG EINES SCHALTSCHRANKINNENRAUMS**
CABINET LIGHT FOR THE ILLUMINATION OF A CABINET INTERIOR
ÉCLAIRAGE D'ARMOIRE DE DISTRIBUTION POUR ÉCLAIRER L'ESPACE INTÉRIEUR D'UNE ARMOIRE DE DISTRIBUTION

(30) Priorität: 18.04.2016 DE 102016107149; 22.04.2016 DE 102016107569
(43) Veröffentlichungstag der Anmeldung: 27.02.2019
(73) Patentinhaber: Rittal GmbH & Co. KG, 35745 Herborn (DE)
(72) Erfinder: PREMYSLER, Ewgenij, 60438 Frankfurt am Main (DE); DEUSING, Marco, 35745 Herborn (DE); SCHAFFER, Kurt-Michael, 90542 Eckental (DE)
(74) Vertreter: Angerhausen, Christoph
(86) Internationale Anmeldenummer: PCT/DE2017/100269
(87) Internationale Veröffentlichungsnummer: WO 2017/182031

(56) Entgegenhaltungen:
- EP-A1- 0 657 708
- DE-U1-202012 001 584
- DE-U1-202015 106 929
- JP-A- 2003 116 726
- KR-B1- 101 602 845
- US-A1- 2002 118 537

## Beschreibung

Die Erfindung geht aus von einer Schaltschrankleuchte für die Beleuchtung eines Schaltschrankinnenraums, wobei die Schaltschrankleuchte einen Lampengrundkörper, von dem ein Leuchtmittel der Schaltschrankleuchte gehalten ist, und eine an dem Lampengrundkörper montierte, das Leuchtmittel umschließende lichtdurchlässige Leuchtmittelabdeckung aufweist, wobei die Leuchtmittelabdeckung im Querschnitt senkrecht zu ihrer Längsrichtung rechteckig, insbesondere U-förmig, ausgebildet ist, mit zwei parallel beabstandeten lichtdurchlässigen Schenkeln, zwischen denen das Leuchtmittel bei auf dem Lampengrundkörper aufgesetzter Leuchtmittelabdeckung angeordnet ist, und mit einem die parallel beabstandeten Schenkel verbindenden weiteren Schenkel, wobei die Leuchtmittelabdeckung über symmetrisch angeordnete Befestigungsmittel in zwei in einer Drehebene um 180° zueinander verdrehten Positionen auf dem Lampengrundkörper montiert werden kann, wobei das Leuchtmittel eine ebene Leuchtmittelplatine aufweist, auf der eine Mehrzahl Einzelleuchtmittel, insbesondere LEDs oder OLEDs, verteilt angeordnet sind. Eine derartige Schaltschrankleuchte ist aus der DE 20 2012 001 584 U1 bekannt. Ähnliche Leuchten zeigen auch die DE 10 2011 122 204 B3, die KR 101 602 845 B1, die DE 20 2015 106 929 U1, die JP 2003 116716 A und die EP 0 657 708 A1.

Je nach Anwendungsfall wird eine Schaltschrankleuchte im Inneren des Schaltschranks in unterschiedlicher Position und Ausrichtung montiert, etwa abhängig davon, wo gerade unter Berücksichtigung des Schaltschrankinnenraumausbaus noch Platz für die Schaltschrankleuchte vorhanden ist und aus welchem Winkel heraus die Schaltschrankleuchte den Schaltschrankinnenraum vorzugsweise ausleuchten soll. Diese Faktoren variieren jedoch von Anwendungsfall zu Anwendungsfall, so dass eine Schaltschrankleuchte mit standardisiertem Abstrahlprofil häufig nur einen nicht zufriedenstellenden Kompromiss hinsichtlich der erreichbaren Schaltschrankausleuchtung erzielen kann. In Extremfällen kommt es sogar dazu, dass die Schaltschrankleuchte aufgrund des Platzmangels im Schaltschrankinnenraum derart ungünstig positioniert werden muss, dass von ihr eine für eine vor der geöffneten Schaltschranktür stehende Person hinderliche Blendwirkung ausgeht. Dies ist häufig schon dadurch bedingt, dass üblicherweise bei Schaltschrankleuchten, die über einen Licht- oder Bewegungssensor aktiviert werden, der Detektionswinkel des Sensors in den Abstrahlwinkel des Leuchtmittels fällt. So kann beispielsweise der Licht- oder Bewegungssensor der Schaltschranktür zugewandt ausgerichtet sein, so dass das von dem Leuchtmittel ausgehende Licht ebenfalls zumindest anteilig in Richtung Schaltschranktür abgestrahlt wird und so eine vor dem Schaltschrank stehende Person blenden kann und andererseits für die Ausleuchtung des Schaltschrankinnenraums nicht zur Verfügung steht.

Es ist daher die Aufgabe der Erfindung, eine Schaltschrankleuchte der beschriebenen Art derart weiter zu entwickeln, dass sie einerseits eine geringere Blendwirkung aufweist und andererseits eine effektivere Ausleuchtung des Schaltschrankinnenraums erlaubt.

Diese Aufgabe wird durch eine Schaltschrankleuchte mit den Merkmalen des Anspruchs 1 gelöst. Die abhängigen Ansprüche betreffen jeweils vorteilhafte Ausführungsformen der Erfindung.

Demgemäß ist vorgesehen, dass sich die Leuchtmittelplatine parallel zu den parallelen Schenkeln der Leuchtmittelabdeckung erstreckt, wobei sich ein Lichtleitmittel entlang der Innenseite oder der Außenseite eines der beiden parallel beabstandeten Schenkel erstreckt, so dass das Lichtleitmittel in Bezug auf das Leuchtmittel in den beiden um 180° zueinander verdrehten Positionen der Leuchtmittelabdeckung eine unterschiedliche Ausrichtung aufweist.

Durch die Verwendung einer Leuchtmittelplatine mit einer Mehrzahl darauf angeordneter Leuchtmittel ist das abgestrahlte Licht wesentlich gerichteter, da die Platine eine Blenden- bzw. Reflektorwirkung aufweist, wobei sie insbesondere nicht in diejenige Richtung abstrahlt, die von einer die Einzelleuchtmittel aufweisenden Platinenseite abgewandt ist. Die Einzelleuchtmittel können dazu insbesondere nur an einer der beiden gegenüber liegenden Platinenseiten angeordnet und/oder selektiv ansteuerbar sein.

Durch eine Anwinklung des Lichtleitmittels, insbesondere eines Reflektors in Bezug auf die Drehebene der Leuchtmittelabdeckung wird erreicht, dass das Lichtleitmittel in den beiden um 180° zueinander verdrehten Positionen eine unterschiedliche Abstrahlcharakteristik der Schaltschrankleuchte bedingt. Beispielsweise kann ein Reflektor um 45° oder um 90° zu der Drehebene ausgerichtet sein. Die Abdeckung kann als ein vollständig von dem Lampengrundkörper abhebbares Bauteil ausgebildet sein. Die Schaltschrankleuchte kann jedoch auch einen Schwenkmechanismus aufweisen, über den die Leuchtmittelabdeckung zwischen den beiden um 180° zueinander verdrehten Positionen hin und her geschwenkt werden kann. Die Leuchtmittelabdeckung kann im Querschnitt durch die Drehebene symmetrisch ausgebildet sein. Die Befestigungsmittel sind auf keine bestimmten Befestigungsmittel beschränkt, sollten jedoch vorzugsweise für die einfache werkzeuglose Montage der Leuchtmitteabdeckung auf dem Lampengrundkörper geeignet sein. Beispielhaft ist eine Rastverbindung oder eine Nut-Feder-Verbindung denkbar.

Ein Reflektor kann senkrecht zu der Drehebene angeordnet sein. Der Reflektor kann dabei ein planer oder gekrümmter Reflektor sein. Er kann beispielsweise eine reflektierende Beschichtung der Innenseite der Leuchtmittelabdeckung, insbesondere eines Schenkels sein. Grundsätzlich kann der Reflektor parallel zu dem ihm zugeordneten Schenkel und damit senkrecht zu der Drehebene, oder unter einem Winkel zu dem ihm zugeordneten Schenkel ausgerichtet sein.

Der Lampengrundkörper kann an seinen freien Längskanten der parallelen Schenkel der Leuchtmittelabdeckung, über die die Leuchtmittelabdeckung auf dem Lampengrundkörper aufgesetzt ist, über jeweils ein als Nut-Feder-Verbindung ausgebildetes Befestigungsmittel mit dem Lampengrundkörper verbunden sein. Beispielsweise kann an den gegenüber liegenden Innenseiten der parallelen Schenkel im Bereich der freien Längskanten ein sich entlang der Längskante erstreckender Vorsprung ausgebildet sein, der in eine entsprechende Längsnut des Lampengrundkörpers angreift. Die Leuchtmittelabdeckung kann beispielsweise aus einem Kunststoffmaterial gefertigt sein, so dass die Abdeckung elastisch verformbar ist und damit den Einsetzvorgang der Vorsprünge in die Nuten durch elastische Verformung der Leuchtmittelabdeckung unterstützt.

Um die Abstrahlcharakteristik der Schaltschrankleuchte noch weiter zu verbessern, kann vorgesehen sein, dass die lichtdurchlässige Leuchtmittelabdeckung zumindest abschnittweise als plan-konvexe Linse oder als Fresnel-Linse ausgebildet ist, wobei eine konvexe oder sphärische Seite der plan-konvexen Linse beziehungsweise eine Stufenstruktur der Fresnel-Linse an einer dem Leuchtmittel zugewandten Innenseite der Leuchtmittelabdeckung ausgebildet ist.

Dabei kann wenigstens einer der parallel beabstandeten Schenkel der Leuchtmittelabdeckung als die plan-konvexe Linse oder die Fresnel-Linse ausgebildet sein, wobei der mindestens eine parallel beabstandete Schenkel mit der plan-konvexen Linse oder der Fresnel-Linse an einer dem Leuchtmittel abgewandten Außenseite der Leuchtmittelabdeckung plan und/oder unstrukturiert ausgebildet ist.

Die Verwendung einer Leuchtmittelabdeckung, bei der mindestens einer der parallel beabstandeten Schenkel als plan-konvexe Linse oder als Fresnel-Linse ausgebildet ist, eignet sich insbesondere in Verbindung mit der Verwendung gerichteter Lichtquellen wie LEDs oder OLEDs, da so die abgeschatteten Bereiche im Schaltschrankinnenraum, wie sie insbesondere bei der Verwendung gerichteter Lichtquellen entstehen können, verringert werden. Es kann somit insbesondere vorgesehen sein, dass das Leuchtmittel eine gerichtete Lichtquelle ist, insbesondere eine Lichtquelle, die eine Mehrzahl LEDs und/oder OLEDs aufweist, so dass die zumindest abschnittsweise als plan-konvexe Linse oder als Fresnel-Linse ausgebildete, lichtdurchlässige Leuchtmittelabdeckung eine Zerstreuungslinse ist.

Weitere Einzelheiten der Erfindung werden anhand der nachstehenden Figuren erläutert. Dabei zeigt:
- Figur 1: eine schematische Darstellung zweier Einbaulagen einer Schaltschrankl euchte;
- Figur 2: eine Detailansicht einer der beiden Einbaupositionen gemäß Figur 1;
- Figur 3: eine schematische Darstellung von zwei Einbaupositionen einer erfindungsgemäßen Schaltschrankleuchte;
- Figur 4: eine schematische Darstellung zur Veranschaulichung des Drehvorgangs der Leuchtmittelabdeckung;
- Figur 5: eine schematische Darstellung zur Veranschaulichung der sich durch die erfindungsgemäße Schaltschrankleuchte ergebenden Vorteile;
- Figur 6: eine schematische Darstellung einer Ausführungsform der Schaltschrankleuchte im Querschnitt senkrecht zur Längsachse der Schaltschrankleuchte.

Die erfindungsgemäße Schaltschrankleuchte zielt insbesondere darauf ab, die einbaulagenabhängige Blendwirkung der Schaltschranldeuchten aus dem Stand der Technik zu vermeiden. Dies wird gerade dadurch erreicht, dass das Leuchtmittel eine Leuchtmittelplatine ist oder eine solche aufweist, die selektiv abstrahlt. Weiterhin kann vorgesehen sein, dass die Leuchtmittelabdeckung und ein darin vorgesehenes Lichtleitmittel in zwei um 180° verdrehten Positionen auf dem Lampengrundkörper montiert und demgemäß durch die gleichsam veränderte Ausrichtung des Lichtleitmittels, etwa ein Reflektor oder eine Linse, der von der Schaltschrankleuchte ausgeleuchtete Bereich variiert werden kann.

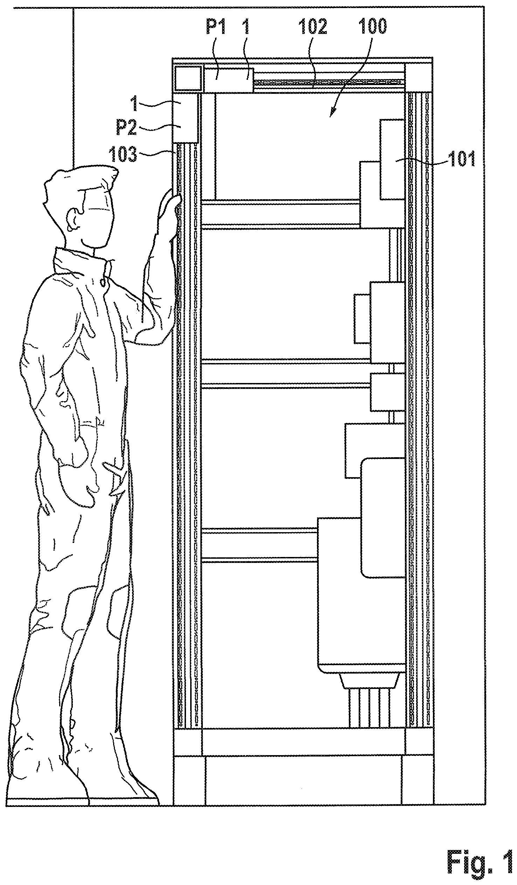

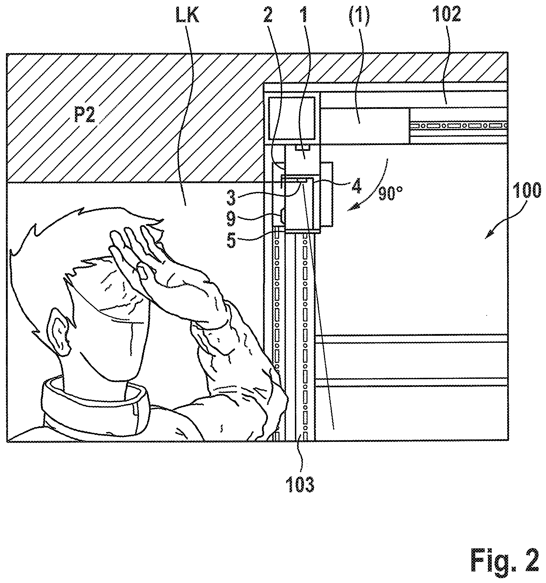

Die Figur 1 zeigt beispielsweise eine erste und eine zweite Einbauposition P1, P2 einer Schaltschrankleuchte 1 nach dem Stand der Technik. In der Position P1 ist die Schaltschrankleuchte beispielsweise in dem oberen Horizontalrahmen des Schaltschrankrahmenprofils fluchtend mit dem Horizontalprofil 102 angeordnet, so dass die Schaltschrankleuchte in der Position P1 im Wesentlichen senkrecht abstrahlt und damit den Schaltschrankinnenraum 100 mit den Schaltschrankkomponenten 101 vergleichsweise effektiv ausleuchtet. Wenn es nun jedoch erforderlich ist, die Schaltschrankleuchte 1 aus der Montageposition P1 in die Montageposition P2 zu setzen, beispielsweise weil auf dem Schaltschrankrahmengestell ein Dachaufbaukühlgerät montiert werden soll und die Dachseite des Schaltschranks für den Luftaustausch zwischen dem Kühlgerät und dem Schaltschrankinnenraum 100 frei sein muss, so kann von der Schaltschrankleuchte, wie dies in Figur 2. dargestellt ist, eine erhebliche Blendwirkung ausgehen.

In der Einbauposition P2 entsprechend Figur 2. ist die Schaltschrankleuchte 1 somit in dem lichten Maß zwischen zwei Vertikalprofilen 103 des Schaltschrankrahmengestells angeordnet. Die Figur 2 zeigt weiterhin, dass die Ausrichtung der Schaltschrankleuchte in der Einbauposition P2 auch insofern fest vorgegeben ist, als dass der Bewegungssensor 9, welcher gerade beim Öffnen der frontseitigen Schaltschranktür anschlagen soll, an einer bestimmten Seite der Schaltschrankleuchte 1 angeordnet ist, welche gerade in Richtung der Schaltschranktür ausgerichtet werden muss. Es wäre beispielsweise nicht sinnvoll, die Schaltschankleuchte 1 in der horizontalen. Drehebene um 180° verdreht in der Einbauposition P1 zu montieren, so dass der Sensor 9 in den Schaltschrankinnenraum 100 hinein zeigt und somit ein Öffnen der Schaltschranktür nicht detektieren würde.

Während die Schaltschrankleuchte 1 somit in der Position P1 eine vergleichsweise gute Ausleuchtung des Schaltschankinnenraums 100 bietet, so geht von ihr in der Einbauposition P2 gemäß Figur 2 eine erhebliche Blendwirkung aus. Der Lichtabstrahlkegel der Schaltschrankleuchte ist durch die beiden Randstrahlen des Lichtkegels LK angedeutet. Durch die feste Anordnung des Reflektors 4 an der Leuchtmitteabdeckung 5 in Bezug auf das Leuchtmittel 3 sowie die unselektive Abstrahlung der verwendeten Leuchtmittel ist der Lichtkegel LK bei den aus dem Stand der Technik bekannten Schaltschrankleuchten weit gefächert und nicht variierbar.

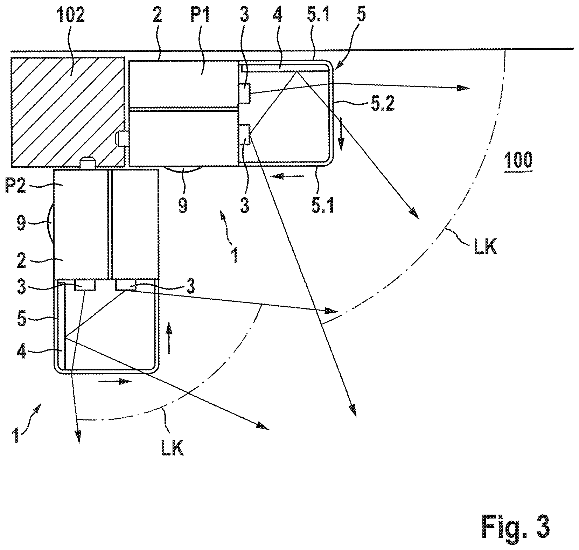

Im Vergleich dazu veranschaulichen die Figuren 3-5 die sich aus der Verwendung einer erfindungsgemäßen Schaltschrankleuchte ergebenden Vorteile. Figur 3 zeigt dabei analog zu den Figuren 1 und 2 die beiden Einbausituationen P1, P2, bei denen die Schaltschrankleuchte 1 einmal im lichten Maß des oberen horizontalen Deckrahmens des Schaltschrankrahmengestells und einmal im lichten Maß des vertikalen, frontseitigen Rahmens des Schaltschrankrahmengestells angeordnet ist. Die beiden Stellpositionen sind wiederum mit P1 und P2 gekennzeichnet. In der Position P1 ist auch bei der dargestellten Ausführungsform der Schaltschrankleuchte analog zu den aus dem Stand der Technik bekannten Schaltschrankleuchten der Reflektor 4 an der Innenseite eines der beiden parallelen Schenkel 5.1 der im Wesentlichen U-formigen Leuchtmittelabdeckung 5 angeordnet, wobei die Leuchtmittelabdeckung 5 gerade so ausgerichtet ist, dass sich der Reflektor 4 an dem in dieser Ausrichtung oberen Schenkel 5.1 angeordnet ist und so eine effektive Ausleuchtung des Schaltschrankinnenraums 100 ermöglicht.

Muss nun die Schaltschrankleuchte aus der Position P1 in die Position P2 überführt werden, so erlaubt es die erfindungsgemäße Schaltschrankleuchte, dass die Leuchtmittelabdeckung 5 um 180° versetzt auf dem Lampengrundkörper 2 montiert werden kann, so dass der Reflektor 4 in Bezug auf den Lampengrundkörper 2 die Seiten wechselt. Während der Reflektor 4 in der Position P1 an der dem Sensor 9 abgewandten Seite des Lampengrundkörpers 2 angeordnet ist, ist er in der Position P2 an der Seite des Lampengrundkörpers 2, an der auch der Sensor 9 angeordnet ist.

In der Position P2 hat der Reflektor 4 somit insbesondere die Wirkung, dass von den Leuchtmitteln 3 ausgehendes Licht nicht aus dem Schaltschrank herausgestrahlt, sondern in das Schaltschrankinnere 100 zurück reflektiert wird und sich auch in der Position P2 analog zu der Position P1 wiederum eine optimale Ausleuchtung des Schaltschrankinnenraums ergibt.

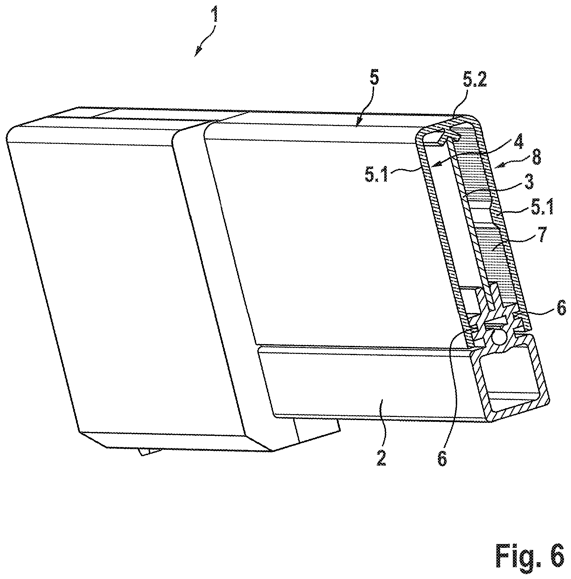

Die Figur 6 zeigt schließlich eine weitere Ausführungsform der Schaltschrankleuchte, bei der das Leuchtmittel 3 ebenfalls als eine Leuchtmittelplatine ausgebildet ist. Die Platine kann an einer ihrer gegenüber liegenden Seiten beispielsweise eine Mehrzahl LEDs oder OLEDs aufweisen, die gerichtetes Licht senkrecht zu der Ebene der Platine abstrahlen. Um die Abstrahlcharakteristik der Schaltschrankleuchte zu verbessern, ist an der Innenseite mindestens einer der parallel beabstandeten Schenkel 5.1 der Leuchtmittelabdeckung 5 eine Stufenstruktur ausgebildet, so dass der Schenkel 5.1 mit der Stufenstruktur 7 eine Fresnel-Linse bildet.

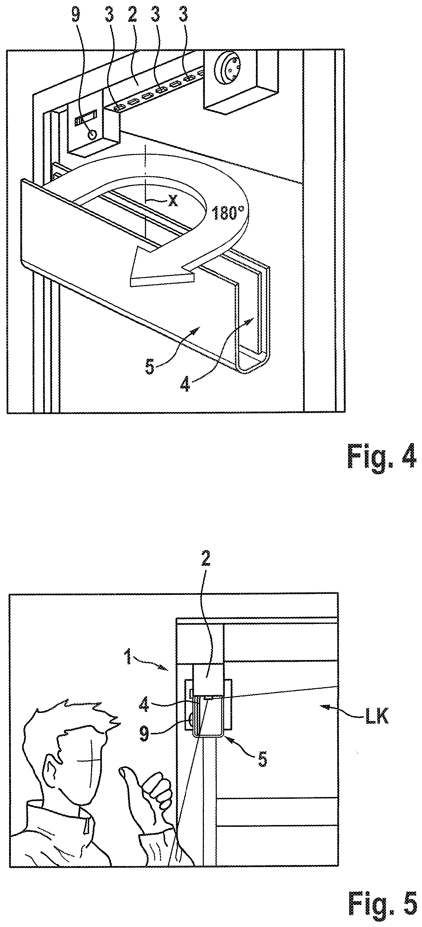

Der Lampengrundkörper 2 weist an gegenüber liegenden und den Innenseiten der beiden Schenkel 5.1 zugewandten Längsseiten eine in Längsrichtung verlaufende Nut und die Schenkel 5.1 an den den Nuten zugewandten Innenseiten einen entsprechenden Vorsprung auf, die in die Nuten nach Art einer Nut-Feder-Verbindung 6 eingreifen, um die Leuchtmittelabdeckung 5 manuell lösbar an dem Lampengrundkörper 2 festzulegen. Um die Abdeckung 5 entsprechend Figur 4 um 180° versetzt auf dem Lampengrundkörper 2 aufzusetzen, wird die Leuchtmittelabdeckung 5 zunächst von dem Lampengrundkörper 2 abgehoben, wozu die Nut-Feder-Verbindung 6 ausgelöst werden muss. Nach dem Auslösen der Verbindung und dem Abheben der Leuchtmittelabdeckung 5 kann die Abdeckung 5 um 180° gedreht werden und wieder auf den Lampengrundkörper 2 aufgesetzt werden, derart, dass die Nut-Feder-Verbindung 6 wieder hergestellt wird und damit die Leuchtmittelabdeckung 5 auf dem Lampengrundkörper 2 festgelegt ist. Um den Abhebvorgang beziehungsweise den Aufsetzvorgang der Leuchtmittelabdeckung 5 auf den Lampengrundkörper 2 zu vereinfachen, können die Nuten und/oder die Vorsprünge der Nuten-Feder-Verbindung eine Anlaufschräge aufweisen.

Die erfindungsgemäße Schaltschrankleuchte ermöglicht es somit, dass allein durch ein Verdrehen der Leuchtmittelabdeckung 5 um 180° die häufig auftretende, montagepositionsabhängige Blendwirkung einer Schaltschrankleuchte unterbunden wird. Dies kann insbesondere erfolgen, ohne dass dadurch der Lampengrundkörper verlagert oder anders befestigt werden muss, was häufig auch aus übergeordneten Gründen, wie etwa aufgrund des Innenausbaukonzepts des Schaltschranks, der vorhandenen Kabelführung für die Bestromung der Schaltschrankleuchte, der Verwendung von Dachkühlgeräten und so weiter, unmöglich ist. Die vorgeschlagene Schaltschrankleuchte erlaubt es weiterhin, dass die Verlagerung der Leuchtmittelabdeckung zwischen den beiden um 180° verdrehten Positionen werkzeuglos erfolgen kann und damit unaufwendig in der Handhabung ist. Bis auf die Leuchtmittelabdeckung selbst kann weitestgehend auf die Verwendung beweglicher Teile, etwa einer beweglichen Blende und/oder von verdrehbaren Leuchtmitteln und anderen Hilfsmitteln zur Lichtlenkung und Fokussierung des Lichtes verzichtet werden.

### Bezugszeichenliste

- 1: Schaltschrankleuchte
- 2: Lampengrundkörper
- 3: Leuchtmittel
- 4: Reflektor
- 5: Leuchtmittelabdeckung
- 5.1: parallel beabstandeter Schenkel
- 5.2: verbindender Schenkel
- 6: Befestigungsmittel
- 7: Stufenstruktur
- 8: Außenseite
- 9: Licht- oder Bewegungssensor
- x: Drehebene
- LK: Lichtkegel

## Patentansprüche

1. Schaltschrankleuchte (1) für die Beleuchtung eines Schaltschrankinnenraums (100), wobei die Schaltschrankleuchte (1) einen Lampengrundkörper (2), von dem ein Leuchtmittel (3) der Schaltschrankleuchte (1) gehalten ist, und eine an dem Lampengrundkörper (2) montierte, das Leuchtmittel (3) umschließende lichtdurchlässige Leuchtmittelabdeckung (5) aufweist, wobei die Leuchtmittelabdeckung (5) im Querschnitt senkrecht zu ihrer Längsrichtung rechteckig, insbesondere U-förmig, ausgebildet ist, mit zwei parallel beabstandeten lichtdurchlässigen Schenkeln (5.1), zwischen denen das Leuchtmittel (3) bei auf dem Lampengrundkörper (2) aufgesetzter Leuchtmittelabdeckung (5) angeordnet ist, und mit einem die parallel beabstandeten Schenkel (5.1) verbindenden weiteren Schenkel (5.2), wobei die Leuchtmittelabdeckung (5) über symmetrisch angeordnete Befestigungsmittel (6) in zwei in einer Drehebene (x) um 180° zueinander verdrehten Positionen auf dem Lampengrundkörper (2) montiert werden kann, wobei das Leuchtmittel (3) eine ebene Leuchtmittelplatine aufweist, auf der eine Mehrzahl Einzelleuchtmittel, insbesondere LEDs oder OLEDs, verteilt angeordnet sind, **dadurch gekennzeichnet, dass** sich die Leuchtmittelplatine parallel zu den parallelen Schenkeln (5.1) der Leuchtmittelabdeckung (5) erstreckt, wobei sich ein Lichtleitmittel entlang der Innenseite oder der Außenseite eines der beiden parallel beabstandeten Schenkel (5.1) erstreckt, so dass das Lichtleitmittel in Bezug auf das Leuchtmittel (3) in den beiden um 180° zueinander verdrehten Positionen der Leuchtmittelabdeckung (5) eine unterschiedliche Ausrichtung aufweist.

2. Schaltschrankleuchte (1) nach Anspruch 1, bei der sich das Lichtleitmittel (3) parallel zu dem ihm zugeordneten Schenkel (5.1) und damit senkrecht zu der Drehebene (x), oder unter einem Winkel zu dem ihm zugeordneten Schenkel (5.1) erstreckt.

3. Schaltschrankleuchte (1) nach Anspruch 1 oder 2, bei der der Lampengrundkörper (2) an seinen freien Längskanten (2.1) der parallelen Schenkel (5.1) der Leuchtmittelabdeckung (5), über die die Leuchtmittelabdeckung (5) auf dem Lampengrundkörper (2) aufgesetzt ist, über jeweils ein als Nut-Feder-Verbindung ausgebildetes Befestigungsmittel (6) mit dem Lampengrundkörper (2) verbunden ist.

4. Schaltschrankleuchte (1) nach einem der vorangegangenen Ansprüche, bei der die lichtdurchlässige Leuchtmittelabdeckung (5), insbesondere zumindest einer der beiden parallelen Schenkel (5.1), zumindest abschnittsweise als plan-konvexe Linse oder als Fresnel-Linse ausgebildet ist, wobei eine konvexe Seite der plan-konvexen Linse bzw. eine Stufenstruktur (7) der Fresnel-Linse an einer dem Leuchtmittel (3) zugewandten Innenseite der Leuchtmittelabdeckung (5) ausgebildet ist.

5. Schaltschrankleuchte (1) nach Anspruch 4, wobei mindestens einer der parallel beabstandeten Schenkel (5.1) der Leuchtmittelabdeckung (5) als plan-konvexe Linse oder Fresnel-Linse ausgebildet ist, wobei der mindestens eine parallel beabstandete Schenkel (5.1) mit der plan-konvexen Linse oder der Fresnel-Linse an einer dem Leuchtmittel (3) abgewandten Außenseite (8) der Leuchtmittelabdeckung (5) plan und/oder unstrukturiert ausgebildet ist.

6. Schaltschrankleuchte (1) nach Anspruch 4 oder 5, wobei das Leuchtmittel (3) eine gerichtete Lichtquelle ist, insbesondere eine Lichtquelle, die eine Mehrzahl LEDs und/oder OLEDs aufweist, so dass die zumindest abschnittsweise als plan-konvexe Linse oder als Fresnel-Linse ausgebildete lichtdurchlässige Leuchtmittelabdeckung (5) eine Zerstreuungslinse ist.

## Claims

1. Switch cabinet light (1) for illuminating a switch cabinet interior (100), wherein the switch cabinet light (1) comprises a light base body (2), which holds an illuminating means (3) of the switch cabinet light (1), and a transparent illuminating means cover (5) mounted at the light base body (2), the illuminating means cover surrounding the illuminating means (3), wherein the illuminating means cover (5) is rectangularly formed, in particular U-shaped, in cross section perpendicular to its longitudinal direction, with two transparent parallelly spaced apart sides (5.1) between which the illuminating means (3) is arranged when the illuminating means cover (5) is placed on the light base body (2), and with a further side (5.2) connecting the parallelly spaced apart sides (5.1), wherein the illuminating means cover (5) can be mounted in two positions on the light base body (2) by means of symmetrically arranged fasteners (6), the positions being rotated relative to one another by 180° in a rotation plane (x), wherein the illuminating means (3) comprises a flat illuminating means board on which a plurality of individual illuminating means, in particular LEDs or OLEDs, are distributed, **characterized in that** the illuminating means board extends parallel to the parallel sides (5.1) of the illuminating means cover (5), wherein a light guide extends along the inside or the outside of one of the two parallelly spaced apart sides (5.1), so that the light guide has a different orientation relative to the illuminating means (3) in the two positions of the illuminating means cover (5) which are rotated by 180° relative to one another.

2. Switch cabinet light (1) according to claim 1, in which the light guide (3) extends parallel to the side (5.1) associated therewith and thus perpendicular to the rotation plane (x), or extends at an angle relative to the side (5.1) associated therewith.

3. Switch cabinet light (1) according to claim 1 or 2, in which the light base body (2) is connected to the light base member (2) by way of a fastener (6), designed as a tongue and groove connector, at its the free longitudinal edges (2.1) of the parallel sides (5.1) of the illuminating means cover (5), by way of which the illuminating means cover (5) is placed onto the light base member (2).

4. Switch cabinet light (1) according to any of the preceding claims, in which the transparent illuminating means cover (5), in particular at least one of the two parallel sides (5.1), is designed at least in sections as a planar-convex lens or a Fresnel lens, wherein a convex side of the planar-convex lens or a stepped structure (7) of the Fresnel lens is formed at an inside of the illuminating means cover (5) facing the illuminating means (3).

5. Switch cabinet light (1) according to claim 4, wherein at least one of the parallelly spaced apart sides (5.1) of the illuminating means cover (5) can be designed as the planar-convex lens or the Fresnel lens, wherein the at least one parallelly spaced apart side (5.1) with the planar-convex lens or Fresnel lens is formed in a planar and/or unstructured manner on an outside (8) of the illuminating means cover (5) facing away from the illuminating means (3).

6. Switch cabinet light (1) according to claim 4 or 5, wherein the illuminating means (3) is a directed light source, in particular a light source comprising a plurality of LEDs and/or OLDs, so that the transparent illuminating means cover (5), which is designed at least in sections as a planar-convex lens or a Fresnel lens, is a diverging lens.

## Revendications

1. Luminaire d'armoire de commande (1) pour l'éclairage d'un espace interne d'une armoire de commande (100), dans lequel le luminaire d'armoire de commande (1) comprend un corps de base de lampe (2), grâce auquel un moyen d'éclairage (3) du luminaire d'armoire de commande (1) est maintenu, et une protection de moyens d'éclairage transparente (5) montée sur le corps de base de lampe (2) et entourant le moyen d'éclairage (3), dans lequel la protection de moyens d'éclairage (5) présente une section transversale perpendiculaire à sa direction longitudinale de forme rectangulaire, plus particulièrement en forme de U, avec deux montants transparents (5.1) distants et parallèles entre lesquels le moyen d'éclairage (3) est disposé lorsque la protection de moyens d'éclairage (5) est posée sur le corps de base de lampe (2) et avec un autre montant (5.2) reliant les montants (5.1) parallèles et distants, dans lequel la protection de moyens d'éclairage (5) peut être montée, par l'intermédiaire de moyens de fixation (6) disposés de manière symétrique, dans deux positions, tournées l'une par rapport à l'autre dans un plan de rotation (x) de 180°, sur le corps de base de lampe (2), dans lequel le moyen d'éclairage (3) comprend une platine de moyens d'éclairage plane sur laquelle sont répartis une pluralité de moyens d'éclairage individuels, plus particulièrement des LOD ou des OLED, **caractérisé en ce que** la platine de moyens d'éclairage s'étend parallèlement aux montants parallèles (5.1) de la protection de moyens d'éclairage (5), dans lequel un moyen de guidage de lumière s'étend le long du côté interne ou du côté externe d'un des deux montants (5.1) parallèles distants, de façon à ce que le moyen de guidage de lumière présente, par rapport au moyen d'éclairage (3), dans les deux positions, tournées l'une par rapport à l'autre de 180°, de la protection de moyens d'éclairage (5), une orientation différente.

2. Luminaire d'armoire de commande (1) selon la revendication 1, dans lequel le moyen de guidage de lumière (3) s'étend parallèlement au montant (5.1) correspondant et dont perpendiculairement au plan de rotation (x) ou avec un angle par rapport au montant (5.1) correspondant.

3. Luminaire d'armoire de commande (1) selon la revendication 1 ou 2, dans lequel le corps de base de lampe (2) est relié, au niveau de ses arêtes longitudinales libres (2.1) des montants parallèles (5.1) de la protection de moyens d'éclairage (5), par l'intermédiaire desquels la protection de moyens d'éclairage (5) est posée sur le corps de base de lampe (2), avec le corps de base de lampe (2) par l'intermédiaire d'un moyen de fixation (6) conçu comme une liaison par rainure et languette.

4. Luminaire d'armoire de commande (1) selon l'une des revendications précédentes, dans lequel la protection de moyens d'éclairage transparente (5), plus particulièrement au moins un des deux montants parallèles (5.1), est conçu, au moins à certains endroits, comme une lentille plane convexe ou comme une lentille de Fresnel, dans lequel un côté convexe de la lentille plane convexe resp. une structure en gradins (7) de la lentille de Fresnel est réalisé, au niveau d'un côté interne de la protection de moyens d'éclairage (5) orienté vers le moyen d'éclairage (3).

5. Luminaire d'armoire de commande (1) selon la revendication 4, dans lequel au moins un des montants (5.1) parallèles distants de la protection de moyens d'éclairage (5) est conçu comme une lentille plane convexe ou une lentille de Fresnel, dans lequel l'au moins un montant (5.1) parallèle distant avec la lentille plane convexe ou la lentille de Fresnel de manière plane et/ou non structurée sur un côté externe (8) de la protection de moyens d'éclairage (5) opposé au moyen d'éclairage (3).

6. Luminaire d'armoire de commande (1) selon la revendication 4 ou 5, dans lequel le moyen d'éclairage (3) est une source de lumière orientée, plus particulièrement une source de lumière qui comprend une pluralité de LED et/ou d'OLED, de façon à ce que la protection de moyens d'éclairage (5) transparente, conçue, au moins à certains endroits, comme une lentille plane convexe ou comme une lentille de Fresnel, soit une lentille divergente.
